(19) Europäisches Patentamt
European Patent Office
Office européen des brevets

(11) Veröffentlichungsnummer : **0 007 604**
**B1**

(12) **EUROPÄISCHE PATENTSCHRIFT**

(45) Veröffentlichungstag der Patentschrift : **19.08.81**

(21) Anmeldenummer : **79102591.9**

(22) Anmeldetag : **23.07.79**

(51) Int. Cl.³ : **C 09 B 67/46**, D 06 P 1/16, D 06 P 1/52, C 08 L 61/00, C 09 D 11/00

# (54) Wässrige Farbstoffpräparate von in Wasser unlöslichen bis schwerlöslichen Farbstoffen, Verfahren zu ihrer Herstellung und ihre Verwendung für Druckpasten sowie für das Bedrucken von Textilmaterialien.

(30) Priorität : **02.08.78 CH 8238/78**

(43) Veröffentlichungstag der Anmeldung : **06.02.80 (Patentblatt 80/03)**

(45) Bekanntmachung des Hinweises auf die Patenterteilung : **19.08.81 Patentblatt 81/33**

(84) Benannte Vertragsstaaten : **CH DE FR GB IT**

(56) Entgegenhaltungen :
**CH - A - 563 193**
**CH - A - 17 439/73**
**DE - A - 2 520 527**
**DE - A - 2 757 330**
**FR - A - 1 573 698**
**FR - A - 2 410 027**
**GB - A - 2 011 484**

(73) Patentinhaber : **CIBA-GEIGY AG**
**Patentabteilung Postfach**
**CH-4002 Basel (CH)**

(72) Erfinder : **Becker, Carl, Dr.**
**Faldostrasse 9**
**CH-4059 Basel (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 007 604 B1

Imprimerie Jouve, 17, rue du Louvre, 75001 Paris, France

Wäßrige Farbstoffpräparate von in Wasser unlöslichen bis schwerlöslichen Farbstoffen, Verfahren zu ihrer Herstellung und ihre Verwendung für Druckpasten sowie für das Bedrucken von Textilmaterialien

Die Erfindung betrifft neue wässrige Farbstoffpräparate von in Wasser unlöslichen bis schwerlöslichen Farbstoffen, ein Verfahren zur Herstellung dieser Farbstoffpräparate, die Verwendung derselben zur Bereitung von Druckpasten, deren Verwendung zum Bedrucken von Trägermaterialien für den Transferdruck, zum Bedrucken von insbesondere Textilmaterialien oder zum Färben von Textilmaterialien, sowie die bedruckten Trägermaterialien und das mittels dieser Farbstoffpräparate im Transferdruck bedruckte oder im Färbe- oder Druckprozess gefärbte bzw. bedruckte Material.

Handelsformen von in Wasser unlöslichen bis schwerlöslichen Farbstoffen sind sowohl als Flüssigmarken als auch als Pulvermarken bekannt. Letztere haben den Nachteil, dass sie vor der applikatorischen Verwendung erst in Wasser dispergiert werden müssen. Die bekannten Flüssigformulierungen haben den Nachteil, dass sie in der Regel grosse Mengen Dispergiermittel, meist über 30 Gew.%, und nur ca. 20 Gew.% Farbstoff enthalten.

Aus der DT-OS 2.520.527 ist bekannt, dass man lagerstabile, flüssige, an Farbstoff hochkonzentrierte Farbstoffpräparate herstellen kann, wenn man ausgewählte anionische Dispergiermittel zusammen mit nichtionogenen Dispergiermitteln und hydrotropen Mitteln, insbesondere Harnstoff, verwendet.

Die Verwendung von Harnstoff oder ionischen hydrotropen Mitteln bringt jedoch in vielen Fällen Nachteile mit sich. Präparate, welche ionische hydrotrope Mittel enthalten, sind wegen ihres zu hohen Elektrolytgehaltes in elektrolytempfindlichen Anwendungsmedien, z.B. in solchen, die Polyacrylatverdicker enthalten, kaum zu verwenden. Präparate mit Harnstoff als hydrotropem Mittel erleiden bei längerer Lagerung infolge Ammoniakabspaltung eine Veränderung des pH-Wertes, was bei alkaliempfindlichen Farbstoffen zu teilweiser Zersetzung führen kann. Ausserdem wird durch Ammoniakabspaltung zusätzlich Elektrolyt gebildet. Bei Anwesenheit von Harnstoff besteht ferner bei vielen Verdickern die Gefahr, dass diese braun werden oder verhärten, so dass sie sich nur schlecht auswaschen lassen. Zudem kann durch die Ammoniakbildung in den hermetisch verschlossenen Aufbewahrungsgefässen der Präparate ein gefährlicher Ueberdruck entstehen.

Ein weiterer Nachteil dieser bekannten Farbstoffpräparate ist ihr Gehalt an anionaktiven Dispergiermitteln, die bei Druckpasten, die elektrolytempfindliche Verdicker enthalten, die Viskosität erniedrigen, was, sofern möglich, durch Einsatz wesentlich grösserer Mengen dieser Verdicker ausgeglichen werden muss. Dies beeinträchtigt wiederum das nachträgliche Auswaschen des Verdickers.

Der vorliegenden Erfindung lag daher die Aufgabe zugrunde, Farbstoffpräparate von in Wasser unlöslichen bis schwerlöslichen Farbstoffen herzustellen, welche die oben aufgeführten Nachteile nicht aufweisen.

Es wurden nun von anionaktiven Dispergiermitteln freie Farbstoffpräparate gefunden, die einen wesentlich kleineren Gehalt an Dispergiermitteln aufweisen als bisher üblich und die überraschenderweise eine sehr gute Dispersionsstabilität zeigen. Diese neuen Farbstoffpräparate sind dadurch charakterisiert, dass sie ein Gemisch an nichtionischen Dispergiermitteln, bestehend aus einem Aminoplast-Vorkondensat und einem Copolymerisat von Aethylenoxid mit einem weiteren Olefinoxid, enthalten.

Dank dem geringen Gehalt an Dispergiermitteln ist es nun möglich, mit aus den erfindungsgemässen Farbstoffpräparaten hergestellten Druckpasten im Direktdruck Drucke auf Textilmaterial zu erhalten, welche nach einer Hochtemperaturfixierung nicht mehr oder nur noch kurz nachgewaschen werden müssen, was wesentliche ökologische und ökonomische Vorteile bietet. Die erhaltenen Drucke sind sofort gebrauchsfertig.

Unerwarteterweise erzielt man mit den erfindungsgemässen Farbstoffpräparaten, wenn sie in Druckpasten mit synthetischen Verdickern eingesetzt werden, beim Bedrucken von synthetischem Material wesentlich höhere Fixiergrade als mit den bisher üblichen Präparaten, und ausserdem ist auch noch die Migration der Farbstoffe während des Trocknens geringer.

Die vorliegende Erfindung betrifft somit neue, wässrige elektrolytarme bis elektrolytfreie Farbstoffpräparate von in Wasser unlöslichen bis schwerlöslichen Farbstoffen, deren Teilchengrösse kleiner als 10 $\mu$, insbesondere kleiner als 2 $\mu$ ist, und ist dadurch gekennzeichnet, dass diese Präparate mindestens 10 Gew.% Wasser, 25-60 Gew.% eines feindispersen in Wasser unlöslichen bis schwerlöslichen Farbstoffes, 0,1-5 Gew.% mindestens eines wasserlöslichen Aminoplast-Vorkondensates, 0,5-5 Gew.% eines nichtionogenen Copolymerisates von Aethylenoxid mit einem weiteren Olefinoxid mit mindestens 65 Gew.% Aethylenoxidanteil und einem Molekulargewicht über 12 000 sowie gegebenenfalls weitere nicht ionogene Zusätze enthalten.

Als in Wasser unlösliche bis schwerlösliche Farbstoffe kommen vor allem Dispersionsfarbstoffe und Küpenfarbstoffe in Betracht. Es handelt sich um Farbstoffe verschiedener Klassen, bei den Dispersionsfarbstoffen beispielsweise um Nitrofarbstoffe, Aminoketonfarbstoffe, Ketoniminfarbstoffe, Methinfarbstoffe, Nitrodiphenylaminfarbstoffe, Chinolinfarbstoffe, Aminonaphthochinonfarbstoffe, Cumarinfarbstoffe und insbesondere um Anthrachinonfarbstoffe und Azofarbstoffe, wie Monoazo- und Disazofarbstoffe.

Als Küpenfarbstoffe finden beispielsweise indigoide Farbstoffe, anthrachinoide Farbstoffe, wie z.B. Indanthren, sowie Schwefelfarbstoffe Verwendung.

Unter Farbstoffen sollen auch optische Aufheller verstanden werden. Es kommen z.B. in Wasser

unlösliche bis schwerlösliche Aufheller der folgenden Verbindungsklassen in Frage : Stilbene, Cumarine, Benzocumarine, Pyrene, Pyrazine, Pyrazoline, Oxazine, Mono- oder Dibenzoxazolyl- oder -imidazolylverbindungen, Aryltriazol und v-Triazol-Derivate sowie Naphthalsäureimide.

Es versteht sich, dass der Farbstofftyp weitgehend bestimmt wird vom gewünschten Farbton und vom Einsatzgebiet der erfindungsgemässen wässrigen Farbstoffpräparate.

Werden diese z.B. zur Bereitung von Druckpasten und weiteren Verwendung im Transferdruck eingesetzt, so wird man als in Wasser unlösliche bis schwerlösliche Farbstoffe solche verwenden, welche für das Transferdruckverfahren geeignet sind, insbesondere Dispersionsfarbstoffe, welche bei atmosphärischem Druck zwischen 150 und 220 °C zu mindestens 60 % in weniger als 60 Sekunden in den Dampfzustand übergehen, hitzestabil und umzersetzt transferierbar sind.

Werden diese z.B. zur Herstellung von Druckpasten zum Bedrucken von Textilmaterialien im Direktdruck, einer bevorzugten Anwendungsart der erfindungsgemässen Farbstoffpräparate, oder zur Herstellung von Färbebädern zum Färben von Textilmaterialien eingesetzt, so wird man Dispersionsfarbstoffe verwenden, welche gute Färbe- und Fixiereigenschaften besitzen und nass-, sublimier- und lichtechte Färbungen ergeben.

Im übrigen ist est auch möglich, Gemische gleicher oder verschiedener Farbstofftypen sowie optischer Aufheller im definitionsgemässen Rahmen in den wässrigen Präparaten einzusetzen. Vorzugsweise enthalten die erfindungsgemässen Präparate 35-50 Gew.% an Farbstoff bzw. optischem Aufheller, und zwar in einer möglichst elektrolytarmen Ausgangsform.

Als wasserlösliche Aminoplast-Vorkondensate kommen Kondensationsprodukte in Frage, die durch Umsetzung einer Carbonylverbindung mit einer Amino-, Imino- oder Amidgruppen enthaltenden Verbindung erhalten werden können.

Vorzugsweise werden als Carbonylverbindungen Aldehyde oder Ketone eingesetzt, wie z.B. Acetaldehyd, Propion-, n-Butyr-, iso-Butyr- oder Crotonaldehyd sowie Glyoxal, Chloral, Acrolein, Furfural, Aceton, Diäthylketon, Aethyl-propylketon, Cyclohexanon, vor allem aber Formaldehyd.

Geeignete Amino-, Imino- oder Amidgruppen enthaltende Verbindungen sind z.B. Säureamide, wie Acetamid, Propionamid, Butyramid, Urethane, wie Methyl-, Aethyl-, Propylurethan, Sulfonsäureamide, wie Methan-, Aethan-, Propan- oder Butansulfonsäureamid, Guanidin, Sulfurylamid, Cyanamid, Dicyandiamid, Thioharnstoff oder gegebenenfalls substituiertes Anilin sowie vorzugsweise Benzo- oder Acetoguanamin, Melamin sowie Harnstoff oder Harnstoffderivate, wie Acetylendiharnstoff, Aethylenharnstoff, Propylenharnstoff, Oxäthyl-äthylenharnstoff oder Alkyltriazone, wie z.B. Methyl- oder Aethyltriazon. Besonders bevorzugt von diesen sind Harnstoff und Melamin.

Die OH-Gruppen der obengenannten Aminoplast-Vorkondensate können ganz oder teilweise veräthert sein, was durch Umsetzung der Kondensationsprodukte aus Aldehyd bzw. Keton und Carbonylverbindung mit niederen Alkoholen, vorzugsweise Methanol erfolgt.

Besonders wertvolle Aminoplast-Vorkondensate stellen die Kondensationsprodukte aus Formaldehyd mit einem Harnstoffderivat, Benzo- oder Acetoguanamin sowie vor allem Harnstoff oder Melamin dar, wobei vorzugsweise mindestens 2 Mol Formaldehyd pro Mol Harnstoff oder Melamin umgesetzt wurden. Vorzugsweise handelt es sich um Produkte, bei denen, beispielsweise durch «umgekehrte Osmose», Elektrolyte weitgehend eliminiert worden sind.

Beispiele solcher besonders geeigneter Aminoplast-Vorkondensate sind :

Dimethylolmelamin, Hexamethylolmelamin, Pentamethylolmelamin veräthert mit 2-3 oder mit 5 Mol Methanol, Dimethylolharnstoff und Tetramethylolharnstoff.

Es ist auch möglich, Gemische der oben aufgeführten Aminoplast-Vorkondensate anzuwenden.

Die Menge an Aminoplast-Vorkondensat beträgt 0,1-5 Gew.%, vorzugsweise 0,5-3 Gew.%, bezogen auf das Gesamtgewicht des Präparates oder 2-10 Gew.%, vorzugsweise 3-6 Gew.% bezogen auf den Farbstoff.

Neben dem wasserlöslichen Aminoplast-Vorkondensat enthalten die erfindungsgemässen Präparate 0,5-5, insbesondere 1-3 Gew.%, bezogen auf das Gewicht des Präparates, bzw. 2-10 Gew.%, vorzugsweise 3-6 Gew.%, bezogen auf das Gewicht des Farbstoffes, eines nichtionogenen Copolymerisates von Aethylenoxid mit einem weiteren Olefinoxid mit einem Aethylenoxidanteil von mindestens 65 Gew.%, vorzugsweise mindestens 80 Gew.%.

Als Olefinoxid kommen z.B. in Frage : 1,2- oder 2,3-Butylenoxid, Styroloxid, 2,3-Epoxyhexan, 1,2-Epoxyhexan, 1,2-Epoxyoctan, Butadienmonoxid, Cyclohexenmonoxid insbesondere jedoch Propylenoxid.

Bevorzugt sind die Copolymerisate von Aethylenoxid und Propylenoxid und insbesondere solche der Formel

$$HO(CH_2-CH_2-O)_a-(\underset{\displaystyle CH_3}{\underset{|}{C}}H-CH_2-O)_b-(CH_2-CH_2-O)_c-H$$

worin die Summe von a und c eine Zahl von mindestens 150, vorzugsweise zwischen 200 und 400 und b eine Zahl zwischen 20 und 100, vorzugsweise 30 bis 80 bedeutet.

Unter diesen haben sich für das erfindungsgemässe Verfahren die folgenden Copolymerisate als besonders geeignet erwiesen :

a) Copolymerisate der oben angegebenen Formel, worin die Summe von a und c eine Zahl von 200 bis 225 und b eine Zahl von 60 bis 80 bedeutet,

b) Copolymerisate der oben angegebenen Formel worin die Summe von a und c eine Zahl von 280 bis 320 und b eine Zahl von 50 bis 60 bedeutet,

c) Copolymerisate der oben angegebenen Formel worin die Summe von a und c eine Zahl von 220 bis 280 und b eine Zahl von 40 bis 55 bedeutet.

Falls gewünscht oder erforderlich können diesen Farbstoffpräparaten weitere eigenschaftsverbessernde nicht ionogene. Zusätze beigegeben werden, wie z.B. hygroskopische Mittel, und Antifrostmittel, z.B. die Polyole, Aethylenglykol, Monopropylenglykol, Diäthylenglykol, Glycerin, Sorbit und andere oder Formamid ; Antimicrobica ; Fungicide, z.B. wässrige Formalinlösung ; Antischaummittel und viskositätsverbessernde Mittel.

Als besonders lagerstabil haben sich die Präparate erwiesen, welche mindestens 20 Gew.% Wasser, 25 bis 60, insbesondere 35-50 Gew.% eines fein verteilten Dispersionsfarbstoffes, 0,1 bis 5, insbesondere 0,5-3 Gew.% eines wasserlöslichen Aminoplast-Vorkondensates, 0,5 bis 5 insbesondere 1-3 Gew.% eines Copolymerisates von Aethylenoxid und Propylenoxid mit mindestens 65 Gew.% Aethylenoxidgehalt, sowie gegebenenfalls weitere nicht ionogene Zusätze enthalten.

Die Herstellung der neuen wässrigen Farbstoffpräparate erfolgt beispielsweise dadurch, dass man den definitionsgemässen Farbstoff in Wasser mit mindestens einem der genannten Aminoplast-Vorkondensate und/oder nichtionogenen Copolymerisat von Aethylenoxid mit einem weiteren Olefinoxid vermischt und vermahlt, was z.B. in einer Kugelmühle oder Sandmühle erfolgt und die restlichen Komponenten vorgängig, während oder auch erst nach dem Mahlprozess zugibt, sodass ein Präparat entsteht, dessen Teilchengrösse kleiner als 10 $\mu$, insbesondere kleiner als 2 $\mu$ ist. Vorzugsweise mahlt man zunächst ein Gemisch aus Farbstoff und dem genannten Copolymerisat und gibt nach dem Mahlen das Aminoplast-Vorkondensat zu.

Da die erfindungsgemässen Präparate elektrolytarm bis elektrolytfrei sind, können im Gegensatz zu handelsüblichen Präparationen von Dispersionsfarbstoffen nun auch elektrolytempfindliche Verdicker zur Herstellung von Druckpasten verwendet werden. Als besonders wertvoll haben sich in diesem Zusammenhang vor allem Verdicker auf Polyacrylbasis oder Copolymere aus Aethylen und Maleinsäureanhydrid bewährt. Von den Verdickern auf Polyacrylbasis ist vor allem ein Gemisch aus verzweigtem und linearem Carboxymethylenpolymer geeignet, und zwar insbesondere eine Mischung aus einem verzweigten Carboxymethylenpolymer mit einem Molekulargewicht von etwa 4.000.000 und einem linearen Polymer mit einem Molekulargewicht von etwa 500.000 bis 1.000.000. Die Viskosität dieser Verdicker wird durch die erfindungsgemässen Präparate nicht wesentlich erniedrigt, was in der Praxis von ausschlaggebender Bedeutung ist.

Die neuen Farbstoffpräparate sind dünnflüssig, dispergiermittelarm, elektrolytarm oder elektrolytfrei, feindispers, dispersionsstabil, d.h. nicht aggregierend, und hochkonzentriert an Farbstoff. Sie bleiben sowohl bei längerer Lagerung bei 25 bis 30 °C als auch nach mehrwöchiger Lagerung bei 60 °C stabil, d.h. niedrigviskos und einwandfrei filtrierbar, und verändern ihre Viskosität nur unwesentlich. Bei der Lagerung bleibt die Feinverteilung der Farbstoffe praktisch unverändert. Die neuen Präparate sind stippenfrei verteilbar in allen konventionellen Verdickungen. Bei Verwendung im Direktdruck auf Polyestermaterial sind dank der hohen Fixiergrade, die mit den neuen Präparaten erreicht werden, keine Fixierbeschleuniger erforderlich.

Ein ganz wesentlicher Vorteil bei der Verwendung der neuen Präparate im Direktdruck auf Textilmaterial liegt darin, dass keine oder nur eine einmalige Nachwäsche des gefärbten Materials mit wenig Wasser durchgeführt werden muss. Dies ist bedingt durch den niedrigen Dispergatorgehalt, die Möglichkeit synthetische Verdicker auf Polyacrylbasis zu verwenden und den hohen Fixiergrad.

Falls eine Nachwäsche durchgeführt wird, so kann man statt mit Wasser auch mit Tetrachloräthylen nachwaschen, vorzugsweise bei ca. 20-25 °C. Es ist bei gewissen Farbstoffen günstig dem Tetrachloräthylen geringe Mengen eines Reinigungsverstärkers, z.B. Tetraalkylammoniumsalze, beispielsweise Dimethyldidodecylammoniumchlorid, Fettsäureamid-Kondensationsprodukte oder Hexamethylphosphorsäuretriamid in einer Menge von etwa 1-10, vorzugsweise 2-5 g/l zuzusetzen, gegebenenfalls mit Zusatz einer geringen Menge Wasser.

Die bis heute erhältlichen Präparationen von Dispersionsfarbstoffen enthalten meist wenig Farbstoff neben grossen Mengen an Dispergiermitteln, die nach der Fixierung des Farbstoffes ausgewaschen werden müssen, was eine starke Belastung der Abwässer zur Folge hat.

Die neuen wässrigen Farbstoffpräparate finden Verwendung zur Herstellung von wässrigen, wässrigorganischen, oder organischen Färbeflotten oder Drucktinten oder solchen auf Basis einer Wasser-in-Oel Emulsion. Unter wässrig-organischen Färbeflotten oder Drucktinten sind z.B. solche geeignet, die Wasser, Isopropanol und/oder n-Propanol enthalten. Daneben können noch weitere Bestandteile, wie z.B. Celluloseacetatpropionat vorhanden sein.

Diese genannten Färbeflotten oder Drucktinten sind geeignet zum Färben oder Bedrucken von organischem Material, insbesondere synthetischen Textilmaterialien nach kontinuierlicher oder diskontinuierlicher Verfahrensweise, wie z.B. solchen aus Cellulosetriacetat, synthetischen Polyamiden und

insbesondere Polyester. Die Färbungen können durch Färbe-, Klotz- oder Druckverfahren erhalten werden. Dabei werden die üblicherweise beim Aufbringen von Dispersionsfarbstoffen auf synthetisches Material eingesetzten Zusätze verwendet. Die Materialien können in den verschiedensten Verarbeitungsstadien vorliegen.

Beim kontinuierlichen Färben von Mischgeweben aus Polyester und Cellulosematerial werden üblicherweise Dispersionsfarbstoffe für den Polyester-Anteil und u.a. Reaktivfarbstoffe für den Cellulose-Anteil nach Einbad-Einstufen-Verfahren eingesetzt. Dabei treten bekannterweise unerwünschte Reaktionen zwischen Ligninsulfonaten im Dispersionsfarbstoff und dem Reaktivfarbstoff auf und führen zu erheblichen Ausbeuteminderungen der Reaktivfärbungen und damit zu Problemen hinsichtlich der Reproduzierbarkeit der Färbungen sowie zu verstärkten Belastungen der Abwässer.

Werden dagegen Dispersionsfarbstoff-Formulierungen gemäss der vorliegenden Erfindung eingesetzt, so sind die beschriebenen Mängel vollständig bzw. weitgehend beseitigt.

Die erfindungsgemässen Farbstoffpräparate können auch zum Bedrucken von flächenförmigen Gebilden nach dem Transferdruckprinzip verwendet werden.

Das Transferdruckverfahren ist allgemein bekannt und beispielsweise detailliert in den französischen Patentschriften 1.223.330, 1.334.829 und 1.585.119 beschrieben. Dabei werden sogenannte Hilfsträger, die mit geeigneten Drucktinten bedruckt sind, in einen engen Kontakt mit dem zu bedruckenden Substrat gebracht, worauf unter Wärme- und gegebenenfalls Druckeinwirkung der Farbstoff von dem Träger auf das Substrat transferiert wird.

Als Hilfsträger kommen hitzestabile und räumlich stabile flächenförmige Gebilde, mit vorteilhaft glatter Oberfläche aus Papier, Cellophan, Metallfolien usw. in Betracht (vgl. britische Patentschrift 1.190.889). Bevorzugt ist Papier.

Die erfindungsgemässen elektrolytarmen bis elektrolytfreien, wässrigen Präparate von transferierenden Dispersionsfarbstoffen zeigen die bemerkenswerte Eigenschaft, dass sie sich sowohl in rein wässrigen als auch in wässrig-alkoholischen Drucktintensystemen aggregatfrei und stabil dispergieren lassen.

Geeignete Transferdrucksubstrate sind vorzugsweise flächenförmige Gebilde wie Vliese, Filze, Teppiche und vor allem Gewebe und Gewirke aus synthetischen Fasern.

Enthalten die neuen Präparate optische Aufheller, so finden sie Verwendung zum optischen Aufhellen von Textilmaterialien nach z.B. dem Ausziehverfahren, Hochtemperaturausziehverfahren und Foulardtherm-Verfahren. Gegebenenfalls können zur Stabilisierung der Flotte und/oder zur Erzielung von Carrier-Effekten weitere geeignete Dispergatoren oder andere Hilfsmittel zugesetzt werden.

Eine weitere Anwendung für die erfindungsgemässen optischen Aufheller-Präparate ist in der Spinnmasse-Aufhellung gegeben.

Die folgenden Beispiele erläutern die Erfindung, ohne sie darauf zu beschränken. Teile bedeuten Gewichtsteile und Prozente Gewichtsprozente. Die Temperaturen sind in Grad Celsius angegeben. Falls nicht anders vermerkt, wurden die Viskositäten bei 20 °C mit einem Brookfield-Viskosimeter Typ LVT mit Spindel 3 bei 50 Umdrehungen pro Minute (U/min) gemessen.

Die Filtrierbarkeit der Farbstoffe wurde anhand des folgenden Filtertestes bestimmt:

200 ml enthärtetes Wasser werden zu einer abgewogenen Menge Mahlgut zugegeben und 1 Min. intensiv verrührt. Die Menge Mahlgut ist so zu bemessen, dass die Prüfdispersion 1 Promille Farbstoff-Wirksubstanz enthält. Die verdünnte Dispersion wird auf einer Porzellannutsche durch ein Hartfilter von 7 cm Ø (Filter 597 von Schleicher & Schüll) unter einem Vakuum von ca. 25 Torr filtriert. Das Hartfilter 597 ermöglicht nur eine einwandfreie Filtration, wenn die Suspension Farbstoffpartikeln im Wesentlichen unter 5 Mikron enthält.

Beispiel 1

450 Teile des Dispersionsfarbstoffes der Formel

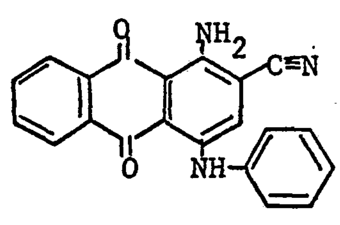

in der Form des von Elektrolyten weitgehend befreiten, getrockneten Rohfarbstoffes werden langsam in ein Dispergiermedium folgender Zusammensetzung eingerührt:

30 Teile eines nichtionogenen Polykondensationsproduktes bestehend aus 20 % Polypropylenoxid und 80 % Polyäthylenoxid mit einem Molekulargewicht von ca. 16 500,

30 Teile einer 67 %igen wässrigen Lösung eines Aminoplast-Vorkondensates, hergestellt aus 1 Mol Melamin, 5 Mol Formaldehyd und 2-3 Mol Methanol,

300 Teile Wasser,

170 Teile 1,2-Propylenglykol und
20 Teile Formaldehyd (Konservierungsmittel).

Die Dispersion wird in einer Rührwerkmühle mittels 3 000 Teilen Zirkonoxid-Mahlkörpern (Zirbeads 1 mm Ø) so lange vermahlen, bis die Primärteilchengrösse des Farbstoffes bei der überwiegenden Mehrzahl der Teilchen unter 5 μ liegt, was nach 20 Stunden erreicht wird. Das Mahlgut wird von den Mahlkörpern abgetrennt und entlüftet. Die Dispersion weist eine Viskosität von 280 cPs (Brookfield-Viscosimeter LVT, 30 U/Min, Spindel 2) auf. Durch Zusatz von 0,1 % Xanthangummi und mehrstündiges Rühren wird die Viskosität auf ca. 800 cPs erhöht. Der pH-Wert beträgt 7,9. Man erhält ein ca. 45 %iges Farbstoffpräparat, welches dünnflüssig bleibt, sich einwandfrei filtrieren lässt (Filtertestmethode wie oben angegeben) und seine Viskosität und seinen Dispersitätsgrad auch nach mehrwöchiger Lagerung bei 60° oder nach mehrmonatiger Aufbewahrung bei wechselnden Raumtemperaturen nur unwesentlich verändert.

Das gleiche Ergebnis erhält man, wenn man die Dispersion in einer Perl- oder Sandmühle mahlt.

Das erhaltene Farbstoffpräparat eignet sich insbesondere für die Herstellung von wässrigen und teilwässrigen Druckfarben für das Bedrucken von Hilfsträgern für den Transferdruck bei Verwendung von elektrolytempfindlichen Verdickungs- und Bindemitteln.

Verfährt man genau wie oben beschrieben, verwendet jedoch anstelle des Gemisches von 30 Teilen des nichtionogenen Polykondensationsproduktes und 30 Teilen Aminoplast-Vorkondensat lediglich das Aminoplast-Vorkondensat alleine (30-60 Teile), so steigt schon während der Mahlung die Viskosität so stark an, dass nicht bis zum Mahlendpunkt weitergemahlen werden kann.

Verfährt man genau wie oben beschrieben, verwendet jedoch statt des Gemisches von 30 Teilen Aminoplast-Vorkondensat und 30 Teilen des nichtionogenen Polykondensationsproduktes lediglich 30 Teile des nichtionogenen Polykondensationsproduktes, so erhält man bei im übrigen gleicher Arbeitsweise ein Farbstoffpräparat, das zunächst ähnliche Eigenschaften aufweist. Nach mehrwöchiger Lagerung bei Raumtemperatur, insbesondere aber nach mehrtägiger Lagerung bei 60° sind jedoch infolge Bildung von Aggregaten eine deutliche Abnahme der Filtrierbarkeit und Bildung eines zähen Sedimentes feststellbar.

## Beispiele 2-8

Verrührt man die in Spalte 2 der folgenden Tabelle angeführten Farbstoffe in der Form des elektrolytarmen trockenen Rohfarbstoffes in den in der Spalte 3 angegebenen Konzentrationsmengen mit jeweils 3 Teilen des in Beispiel 1 angegebenen nichtionogenen Polykondensationsproduktes und mit 3 Teilen desselben Aminoplast-Vorkondensates wie in Beispiel 1, ferner mit je 17 Teilen 1,2-Propylenglykol, 2 Teilen des Konservierungsmittels aus Beispiel 1 und den in Spalte 4 angegebenen Mengen Wasser und mahlt diese Dispersionen in geschlossenen Kugelmühlen (DYNOMILL, Typ KDL) mit Glasperlen von 1 mm Durchmesser, bis die Teilchengrösse der Farbstoffe bei der überwiegenden Mehrzahl der Teilchen unter 5 μ liegt bzw, bis die Filtrierbarkeit (gem. vorstehend beschriebenem Filtertest) einwandfrei ist, so erhält man Farbstoffdispersionen, die nach Einstellen einer Viskosität von zwischen 400 und 800 cPs durch Einrühren von 0,1-0,2 % des Xanthangummis aus Beispiel 1 sich als äusserst lagerstabil erweisen. Diese Farbstoffdispersionen verändern ihre Viskosität und Filtrierbarkeit nach 14 tägiger Aufbewahrung bei 60° und anschliessender Lagerung bei Raumtemperatur während 5 Monaten nur unwesentlich.

Sie eignen sich infolge Abwesenheit ionischer Dispergiermittel insbesondere für die Herstellung von alkoholischen Drucktinten für Tief- und Flexodruck auf Papier, sowie für die Aufbereitung von rein wässrigen Druckpasten für Tief- oder Rotations-filmdruck auf Zwischenträger für den Thermoumdruck.

| Beispiel | Dispersionsfarbstoffe | Gewichtsteile in der Dispersion Farbstoff | Wasser |
|---|---|---|---|
| 2 | 3-Oxy-chinophthalon | 48 | 27 |
| 3 | 1-Amino-2-phenoxy-4-oxyanthrachinon | 50 | 25 |
| 4 | 2-Chlor-4-nitro-4' oxäthyl-äthylaminoazobenzol | 45 | 30 |
| 5 | 1,4-Diamino-2-methoxyanthrachinon | 42 | 33 |
| 6 | 1,4-Di-monomethylaminoanthrachinon | 48 | 27 |
| 7 | 1-Amino-4-anilidoanthrachinon | 45 | 30 |
| 8 | 1-Oxy-4-p-toluidinoanthrachinon | 40 | 31 |

## Beispiele 9-13

Verwendet man anstelle der 30 Teile des Aminoplast-Vorkondensates aus Beispiel 1 die gleiche Menge eines der in der folgenden Tabelle angegebenen Aminoplast-Vorkondensate, verfährt im übrigen jedoch genau gleich wie in Beispiel 1 angegeben, so erhält man Farbstoffpräparate mit annähernd identischen

Eigenschaften, insbesondere gleich guten Lagerbeständigkeiten, wie das Farbstoffpräparat des Beispiels 1.

| Beispiel | Vorkondensat, zusammengesetzt aus Mol | | | |
|---|---|---|---|---|
| | Melamin | Harnstoff | Formaldehyd | Methanol |
| 9 | 1 | 1 | 7-8 | 7-8 |
| 10 | 1 | 0 | 5 | 5 |
| 11 | 1 | 0 | 5 | 5 |
| 12 | 1 | 0 | 3 | 1,5 |
| 13 | 1 | 0 | 6 | 6 |

Beispiel 14

417 Teile des Dispersionsfarbstoffes der Formel

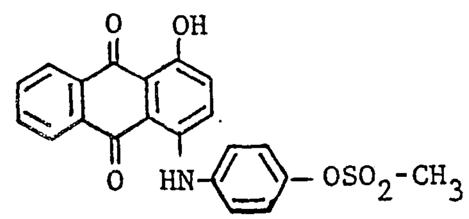

in Form des von Elektrolyten weitgehend befreiten, getrockneten Rohfarbstoffes werden in einem Dispergiermedium, das aus 333 Teilen Wasser, 170 Teilen 1,2-Propylenglykol, 20 Teilen Formaldehyd, 30 Teilen des nichtionogenen Polykondensationsproduktes und 30 Teilen des Aminoplast-Vorkondensates aus Biespiel 1, besteht, angerührt und in einer Rührwerksmühle mittels 3 000 Teilen Zirkonoxyd-Mahlkörpen so lange gemahlen, bis die überwiegende Menge des Farbstoffes auf eine Primärteilchengrösse von unter 5 Mikron reduziert ist, was nach 16 Stunden Behandlung erreicht ist. Die Viskosität der von den Mahlkörpern abgetrennten Suspension ist sehr niedrig (175 cPs) und weist einen pH-Wert von 8,1 auf. Nach 14-tägiger Lagerung bei 60 °C tritt keinerlei Viskositätsveränderung auf und es bildet sich im Gefass kein Bodensatz. Auch die ursprünglich einwandfreie Filtrierbarkeit der Suspension bleibt nach der Heisslagerung vollständig erhalten.

Der Vorteil dieser flüssigen Handelsform besteht insbesondere darin, dass sie äusserst elektrolytarm ist und deshalb in stark elektrolytempfindlichen synthetischen Druckverdickungen keine nennenwerten Viskositäterniedrigungen hervorruft.

Beispiel 15

450 Teile des Dispersionsfarbstoffes der Formel

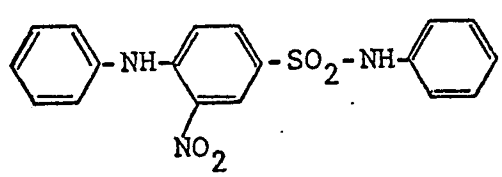

in der Form des elektrolytarm gewaschenen und getrockneten Presskuchens werden zusammen mit 20 Teilen des Aminoplast-Vorkondensates aus Biespiel 9 und 20 Teilen des nichtionogenen Polykondensationsproduktes aus Beispiel 1 in einem Dispergiermedium, bestehend aus 170 Teilen Aethylenglykol, 5 Teilen 35 %iger Formaldehydlösung und 335 Teilen Wasser, angerührt und in einer Kugelmühle mit Zirkonoxid-Mahlkörpern (Zirbeads) gemahlen, bis die in Beispiel 1 angegebene Feinheit erreicht ist. Es resultiert eine Dispersion mit einer Viskosität von 150 cP. Dieser Wert ist auch nach 14-tägiger Aufbewahrung bei 60° noch unverändert. Verdickt mit 0,2 % eines Xanthangummis (Rodopol 23, Rhône Poulenc) bleibt dieses Präparat auch nach siebenmonatiger Lagerung bei Raumtemperatur unverändert dünnflüssig und ohne Bildung von zähem Bodensatz ; auch die Filtrierbarkeit ändert sich nicht. Rührt man dieses Präparat in konventionelle Druckverdickungen ein, so bleiben diese völlig stippenfrei.

Verfährt man genau wie oben beschrieben, verwendet jedoch anstelle von 20 Teilen des Aminoplast-Vorkondensates und 20 Teilen des nichtionogenen Polykondensationsproduktes 20 Teile des gleichen Aminoplast-Vorkondensates allein oder 20 Teile des nichtionogenen Polykondensationsproduktes allein, so erhält man bei im übrigen gleicher Arbeitsweise Farbstoffpräparate, die schon bei der Mahlung oder aber bei der Lagerung gelieren und in Druckverdickungen deutliche Stippen bilden.

Beispiele 16-26

400 Teile des Dispersionsfarbstoffes der Formel

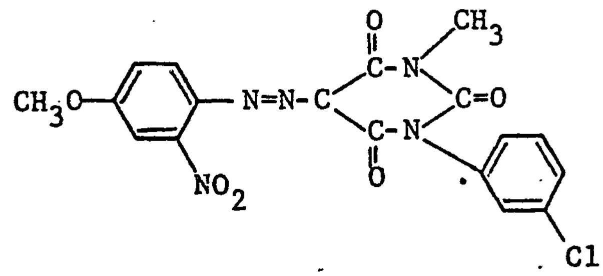

in der Form des elektrolytarm gewaschenen und getrockneten Presskuchens werden zusammen mit 30 Teilen des nichtionogenen Polykondensationsproduktes aus Beispiel 1 in einem Dispergiermedium, bestehend aus 170 Teilen 1,2-Propylenglykol, 5 Teilen Formaldehyd und den in der folgenden Tabelle angegebenen Mengen entionisiertem Wasser und elektrolytarmem Aminoplast-Vorkondensat von der in der Tabelle beschriebenen Zusammensetzung angerührt und analog wie der Farbstoff des Beispiels 14 feingemahlen. Man erhält Flüssigformulierungen mit annähernd identischen Eigenschaften, insbesondere gleich guten Lagerbeständigkeiten wie die Farbstoff präparate aus den Beispielen 1-15. Die Farbstoffpräparate der Beispiele 14-26 sind in ganz besonderem Masse geeignet für das Färben und Bedrucken von Polyestergeweben und -gewirken in Kombination mit den äusserst elektrolytempfindlichen hochpolymeren synthetischen Verdickungsmitteln.

| Beispiel Nummer | Menge Wasser | Menge Aminoplast-Vorkondensat | Aminoplast-Vorkondensat bestehend aus Mol | | | | | | | |
|---|---|---|---|---|---|---|---|---|---|---|
| | | | Melamin | Harnstoff | Aethylen-Harnstoff | Propylen-Harnstoff | Formaldehyd | Glyoxal | Methanol | Isobutyraldehyd |
| 16 | 365 | 30 | - | 2 | - | - | 5 | - | 1-2 | - |
| 17 | 375 | 20 | - | 1 | - | - | 2 | - | - | - |
| 18 | 365 | 30 | 1 | - | 2 | - | 10 | - | 4 | - |
| 19 | 365 | 30 | 1 | 12 | - | - | 30 | - | ~ 30 | - |
| 20 | 375 | 20 | - | 1 | - | - | - | 1 | 2-3 | - |
| 21 | 375 | 20 | 1 | 2 | - | - | 10 | - | 2-4 | 1 |
| 22 | 365 | 30 | - | 1 | - | - | 2 | 1 | - | - |
| 23 | 365 | 30 | - | 1 | - | 1 | 5 | - | 1 | 1 |
| 24 | 365 | 30 | - | 1 | - | - | 3 | - | 1 | 1 |
| 25 | 365 | 30 | - | 2 | - | - | 3 | - | - | - |
| 26 | 375 | 20 | 1 | - | 1 | - | 8 | - | 4-5 | - |

Beispiel 27

351 Teile des Dispersionsfarbstoffes der Formel

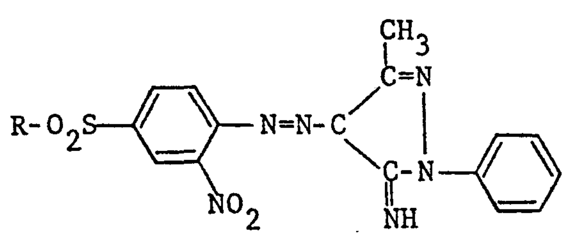

R = 50 % $CH_3$, 50 % $C_2H_5$

in Form des von Elektrolyten weitgehend befreiten trockenen Rohfarbstoffes werden zusammen mit 30 Teilen des nichtionogenen Polykondensationsproduktes aus Beispiel 1, 30 Teilen eines Aminoplast-Vorkondensates (wasserlösliches Harnstoff-Formaldehyd-Kondensationsprodukt), 170 Teilen 1-2-Propylen glykol und 7 Teilen Formaldehyd sowie 412 Teilen Wasser verrührt und in einer Sandmühle mit Ottawasand gemahlen, bis die in Beispiel 1 angegebene Feinheit erreicht ist. Es resultiert eine Formulierung, die eine Viskosität von 120 cPs aufweist. Durch Einrühren von 0,15 % Xanthangummi (Rhodopol 23, Rhône-Poulenc) wird eine Viskosität von ca. 800 cPs eingestellt. Man erhält ein dünnflüssiges Farbstoffpräparat das auch nach 14-tägiger Aufbewahrung in einem geschlossenen Gefäss bei 60 °C oder nach mehrmonatiger Lagerung bei Raumtemperatur seine ausgezeichnete Filtrierbarkeit und niedrige Viskosität beibehält. Die Zumischung dieses Farbstoffpräparates zu einer Polyacryldruckverdickung (Carbopol, B.F. Goodrich Co.) ergibt eine sich in der Viskosität nur unwesentlich verändernde Druckpaste.

Gibt man dagegen zu einer Carbopol-Verdickung ein Farbstoffpräparat, welches in bekannter Weise hergestellt wurde und die folgende Zusammensetzung aufweist

17.5 Teile des Rohfarbstoffes der oben angegebenen Formel,

11.3 Teile eines Gemisches aus ca. 8.2 Teilen eines Sulfitlignins mit einem Verhältnis von Kohlenstoff : organisch gebundenem Schwefel von 17 : 1, das zu 80 % aus Molekülen mit einem Molekulargewicht zwischen 4.000 und 50.000 besteht, und ca. 3.1 Teilen eines sulfonierten Kraft-Lignins mit einem Verhältnis von Kohlenstoff : organisch gebundenem Schwefel von 23 : 1, das zu 80 % aus Molekülen mit einem Molekulargewicht zwischen 1.000 und 30.000 besteht,

7.8 Teile eines Kondensationsproduktes von Naphthalinsulfosäure und Formaldehyd

20.0 Teile Aethylenglykol

0.1 Teile eines Konservierungsmittels

0.2 Teile eines Xanthangummis

43.1 Teile Wasser

in einer solchen Menge, dass die gleiche Farbstoffkonzentration in der Druckpaste resultiert, so wird die Viskosität der Carbopol-Druckpaste derart erniedrigt, dass sie für die Praxis unbrauchbar ist.

Beispiel 28

300 Teile des Dispersionsfarbstoffes der Formel

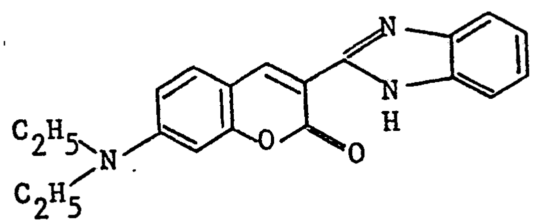

in der Form des von Elektrolyten weitgehend befreiten, getrockneten Rohfarbstoffes werden langsam in ein Dispergiermedium, bestehend aus 480 Teilen Wasser, 170 Teilen 1,2-Propylenglykol und 30 Teilen des nichtionogenen Polykondensationsproduktes aus Beispiel 1, eingerührt.

Die Dispersion wird in einer Rührwerkmühle mittels 3.000 Teilen Zirkonoxid-Mahlkörpern (Zirbeads 1 mm Ø) so lange vermahlen, bis die Primärteilchengrösse des Farbstoffes bei der überwiegenden Mehrzahl der Teilchen unter 5 μ liegt, was nach 22,5 Stunden der Fall ist. Dann gibt man 20 Teile des Aminoplast-Vorkondensates aus Beispiel 18 zu und mahlt eine weitere Stunde.

Man erhält ein Farbstoffpräparat, welches einwandfrei filtrierbar ist und sich als äusserst lagerstbil erweist.

Beispiel 29

400 Teile des Dispersionsfarbstoffes der Formel

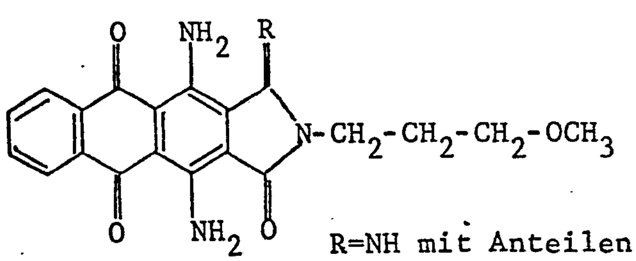

R=NH mit Anteilen an O

in der Form des von Elektrolyten weitgehend befreiten, getrockneten Rohfarbstoffes werden langsam

in ein Dispergiermedium, bestehend aus 380 Teilen Wasser, 170 Teilen 1,2-Propylenglykol und 30 Teilen des nichtionogenen Polykondensationsproduktes aus Beispiel 1, eingerührt.

Die Dispersion wird in einer Rührwerkmühle mittels 3 000 Teilen Zirkonoxid-Mahlkörpern (Zirbeads 1 mm Ø) so lange vermahlen, bis die Primärteilchengrösse des Farbstoffes bei der überwiegenden Mehrzahl der Teilchen unter 5 μ liegt, was nach 22 Stunden der Fall ist. Dann gibt man 20 Teile des Aminoplast-Vorkondensates aus Beispiel 1 zu und mahlt eine weitere Stunde.

Man erhält ein Farbstoffpräparat, welches einwandfrei filtrierbar ist und sich als äusserst lagerstabil erweist.

### Biespiel 30

In 970 Teile einer mit Natronlauge auf pH = 6,8 gestellten 0,25 %-igen Lösung einer hochmolekularen Polyacrylsäure in destilliertem Wasser (Carbopol 846, Goodrich) werden 30 Teile des gemäss Beispiel 29 erhaltenen Farbstoffpräparates eingerührt und gut homogenisiert. Es resultiert eine Druckpaste mit einer Viskosität von 28'000 cP (Brookfield-Viskosimeter LVT, Spindel 4, 6 U/Min bei 20°).

Mit dieser Druckpaste wird nach Verdünnen auf die gewünschte Viskosität auf einer Rotationstiefdruckmaschine (Rouleaudruck) ein Polyestergewebe bedruckt. Anschliessend wird bei 100-140° getrocknet und das bedruckte Gewebe im Hochtemperaturdampf während 8 Minuten bei 180° fixiert.

Anstelle dieser sog. HTS-Fixierung kann ebensogut eine Trockenfixierung (Thermosolierung) während einer Minute bei 200-210° durchgeführt werden.

Nach dem Fixiervorgang ist die Ware gebrauchsfertig. Es resultieren Polyesterdrucke von weichem Griff, von hoher Brillanz und optimaler Farbstärke. Der Fixiergrad des blauen Farbstoffes beträgt über 99 %. Deshalb ist ein Nachwaschen des bedruckten und fixierten Gewebes nicht erforderlich, weil der erzielte Griff sowie die Echtheiten den in der Praxis gestellten Anforderungen vollkommen genügen.

Wird anstelle des obengengenannten Farbstoffes die gleiche Menge des gemäss Beispiel 15 formulierten gelben Farbstoffes eingerührt und in übrigen wie oben beschrieben verfahren, so resultiert ein Gelbdruck von ebenso gutem Fixiergrad (> 99 %). Die Viskosität der Druckpaste beträgt 26'500 cP.

Würden der obengenannte blaue und gelbe Dispersionsfarbstoff konventionell, d.h. in Analogie zu Beispiel 27, letzter Absatz, formuliert, so könnten sie nach obenbeschriebenem Verfahren nicht angewendet werden, weil sich die Viskosität des Verdickungssystems zu stark erniedrigt (< 100 cP).

Verfährt man wie im obigen Beispiel beschrieben, verwendet jedoch anstelle von 970 Teilen Polyacrylsäurelösung die gleiche Menge einer 0,5 %igen Lösung eines vernetzten Copolymeren aus Aethylen und Maleinsäureanhydrid mit einem Molekulargewicht von über 500'000, so erhält man eine Druckpaste mit ähnlich guten Eigenschaften.

### Beispiel 31

In 950 Teile einer mit Natronlauge auf pH = 6,8 gestellten 0,3 %-igen Lösung einer hochmolekularen Polyacrylsäure in destilliertem Wasser (Carbopol 846, Goodrich) werden 50 Teile des gemäss Beispiel 14 erhaltenen violetten Farbstoffpräparates eingerührt und gut homogenisiert. Es resultiert eine Druckpaste mit einer Viskosität von 33'000 cP (Brookfield-Viskosimeter LVT, Spindel 4, 6 U/Min bei 20 °C).

Mit dieser Druckpaste wird auf einer Rotationsfilmdruckmaschine ein Polyestergewebe odergewirke bedruckt. Anschliessend wird bei 100-140° vorgetrocknet und das getrocknete Gewebe oder Gewirke im HT-Dampf während 8 Min bei 180° fixiert. Anstelle dieser Hochtemperatur-Dampfbehandlung kann auch eine Trockenfixierung während einer Minute bei 200-210° durchgeführt werden.

Nach der Fixierung wird die Textilbahn auf einer Haspelkufe oder Continue-Waschanlage nur kurz bei Temperaturen der Bäder von 20-50° nachgewaschen. Die minimale Menge an eingesetzter synthetischer Verdickung sowie der sehr geringe Anteil an nichtfixiertem Farbstoff lassen sich infolge der guten Löslichkeit des Verdickungsmittels kalt bis lauwarm leicht und schnell vom Gewebe entfernen.

Es resultieren brillante, farbstarke, violette Farbtöne mit guten Wasch, Wasser- und Reibechtheiten. Der Fixiergrad des Farbstoffes liegt über 98 %.

Derselbe Farbstoff, konventionell, d.h. mit einer ungefähr der Farbstoff-Wirksubstanzmenge entsprechenden Menge anionischem Dispergiermittel formuliert, kann nach vorstehend beschriebenem Direktdruckverfahren nicht eingesetzt werden, weil durch das Einbringen von zuviel Elektrolyt die Viskosität der angesetzten Druckpaste auf < 100 cP absinkt, wodurch sie völlig unbrauchbar ist und auch durch Zusatz von mehr Polyvinylcarbonsäure (Carbopol) nicht auf die erforderliche Viskosität gebracht werden kann.

Anstelle des gemäss Beispiel 14 erhaltenen Farbstoffpräparates können im obenbeschriebenen Verfahren auch die gemäss den Beispielen 15-29 erhaltenen Präparate eingesetzt werden. Man erhält ebenfalls farbstarke Drucke mit ähnlich guten Echtheiten, wobei ebenfalls nur eine Nachwäsche bei niedrigen Temperaturen und/oder mit wenig Waschflotte erforderlich ist.

### Beispiel 32

Ein Gewebe aus 67 % Polyester und 33 % Baumwolle wird mit einem Flottenauftrag von 60 % mit

einer Flotte folgender Zusammensetzung foulardiert :

80 g/l des gem. Beispiel 15 erhaltenen Farbstoffpräparates

10 g/l des Farbstoffes der Formel

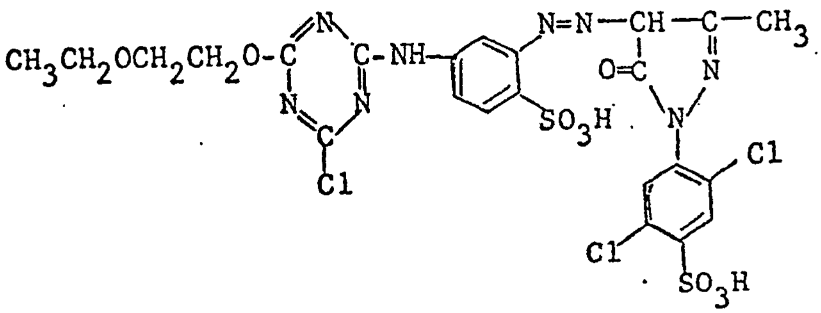

6 g/l des Farbstoffes der Formel

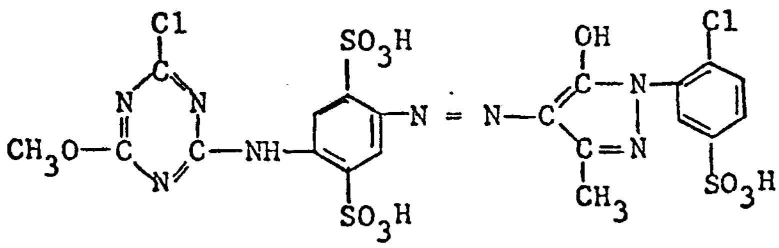

20 g/l Natriumhydrogencarbonat,

100 g/l Harnstoff,

5 g/l Borax und

10 g/l eines handelsüblichen Migrationsinhibitors auf der Basis eines Acrylsäure-acrylamid-copolymerisates.

Anschliessend wird 1 Minute bei 120° getrocknet und 1 Minute bei 210° fixiert.

Durch Seifen bei Kochtemperatur mit einer Flotte, welche pro Liter 1 g eines Additionsproduktes von Aethylenoxid an Stearyl amin und 2 g Soda enthält, wird der nicht fixierte Farbstoff von der Faser entfernt. Das Waschwasser enthält nur wenig Farbstoff und Dispergiermittel.

Man erhält ein gelb gefärbtes Gewebe, das sich durch ein ruhiges, egales Warenbild und vor allem durch eine einwandfreie Ton-in-Ton-Färbung auszeichnet.

Arbeitet man genau wie oben beschrieben, verwendet aber anstelle von 80 g/l des gemäss Beispiel 15 erhaltenen Farbstoffpräparates ein konventionell formuliertes Farbstoffpräparat, welches die gleiche Menge an Farbstoff aber anstelle von 3,2 g des Gemisches aus Aminoplast-Vorkondensat und nichtionogenem Polykondensationsprodukt 36 g eines anionischen Dispergiermittels auf Basis von Ligninulfonaten enthält, so wird eine ganz bedeutend hellere Färbung erhalten. Es resultiert eine ungenügende Ton-in-Ton-Färbung, da infolge der Wechselwirkung zwischen Ligninsulfonat und dem Reaktivfarbstoff der Baumwollanteil wesentlich heller gefärbt ist als der Polyesteranteil. Das Waschwasser ist durch den mit dem Ligninsulfonat verknüpften Reaktivfarbstoff erheblich stärker angefärbt.

Beispiel 33

Eine Druckpaste wird hergestellt, indem 7,5 Teile eines wässrigen Farbstoffpräparates gemäss den Beispielen 1-13 in 92,5 Teile einer Stammverdickung eingerührt werden, welche 0.4 % einer unter Ammoniakzugabe zur Einstellung eines pH-Wertes von 7.1 in Wasser gelösten hochpolymeren Polyacrylsäure (Carbopol 846, B. F. Goodrich Co) enthält.

Durch das Einrühren der Farbstoffpräparate ändert sich die Viskosität der Stammverdickung von 30.000 cP auf 24.000 bis 25.000 (Brookfield-Viskosimeter, Spindel 4, 12 U/Min), d.h. auf einen Wert, der in der Praxis durch- aus toleriert werden kann.

Diese Druckpaste wird etwas verdünnt, mit einer Tiefdruckvorrichtung oder unverdünnt in Film- oder Rotationsfilmdruck auf Papier aufgebracht. Das Papier ist geeignet zur Verwendung im Transferdruckverfahren auf Textilmaterialien, z.B. aus Polyester. Es resultieren scharf-stehende egale Drucke von hoher Farbtiefe.

Rührt man in die oben angegebene Stammverdickung ein Präparat, welches den Farbstoff aus Beispiel 1 in konventioneller Formulierung, d.h. mit 50 bis 100 % anionischem Dispergiermittel (Ligninsulfonat und/oder Naphthalin-Formaldehyd Kondensat oder andere übliche anionische Dispergiermittel) enthält, so ist die entstehende Suspension nicht mehr zum Drucken zu verwenden, da die Viskosität auf ca. 70 bis 80 cP (Brookfield-Viskosimeter, Spindel 2,30 U/Min) absinkt.

Beispiel 34

30 Teile eines gemäss Beispiel 12 formulierten, flüssigen 45 %igen Färbepräparates werden in 500 Teile einer Stammverdickung folgender Zusammensetzung eingerührt und homogenisiert :

15 Teile Natriumalginatverdickung (Manutex F® Alginate Ind. Ltd.)
259 Teile Wasser,
1 Teil Formalin,
150 Teile einer 20 %igen wässrigen Polyvinylalkohollösung enthaltend 10-17 % Polyvinylacetat als Copolymercomponente und
75 Teile 10 %ige wässrige Lösung eines Netz- und Entschäumungsmittels (enthaltend Nonylphenoldiglykoläthersulfat, Silikonöl und ein Lösungsmittel).

Zum Schluss wird noch mit so viel Wasser verdünnt, bis die Viskosität nach Fluidimeter Lefranc ca. 15 beträgt.

Diese Druckfarbe wird mit einer Saueressig-Tiefdruckmaschine mit einer Druckgeschwindigkeit von 60 m/Min auf eine geeignete Papierbahn gedruckt und getrocknet.

Nach einer Heisskalandrierung während 35 Sekunden bei einer Temperatur von 210° in Kontakt mit einem Polyester-Gewebe oder -Gewirke entsteht auf diesem ein Druck mit intensiv blauer Farbe von ausgezeichneten Allgemeinechtheiten.

Beispiel 35

15 Teile des gemäss Beispiel 2 formulierten 48 %igen Färbepräparates werden mit 15 Teilen einer 1:1 Mischung aus entsalztem Wasser und denaturiertem Aethanol verdünnt und in 120 Teile einer Stammverdickung folgender Zusammensetzung unter intensivem Rühren mit einem Schnellrührer eingetragen :

78 Teile denaturiertes Aethanol,
24 Teile Wasser und
3,6 Teile darin gelöster Oxypropylcellulose (Klucel® E, Hercules), sowie
14,4 Teile einer 30 %igen wässrigen Lösung eines Mischpolymerisates auf Basis von Vinylpyrrolidon (Collacral® VL, BASF).

Die resultierende, raschtrocknende, wässrig-alkoholische Drucktinte weist eine Viskosität von 26" (Fordbecher No. 4) auf. Die Drucktinte ist entflockt und verhält sich im Druckchassis rheologisch sehr gut.

Die Drucke, erhalten mit dieser Drucktinte auf einer Papier-Tiefdruckmaschine mit autotypisch geätztem Zylinder mit einer Gravurtiefe von 30 Mikron sind einwandfrei, d.h. sehr rasch und haftfest trocknend und schaumblasenfrei.

Wird der getrocknete Druck mit der Druckseite auf ein Polyester-Satingewebe gelegt und auf einer Blattpresse 30 Sekunden bei 210° behandelt, so erhält man einen konturenscharfen, farbstarken gelben Druck, welcher gute Allgemein-Echtheiten aufweist.

Beispiel 36

Arbeitet man wie im Beispiel 18 beschrieben, verwendet jedoch 30 Teile des gemäss Beispiel 4 formulierten Präparates verdünnt mit 10 Teilen Wasser und 10 Teilen Aethanol und rührt diese Mischung in 100 Teile der Stammverdickung, so erhält man bei im übrigen gleicher Arbeitsweise einen Druck auf Polyester von intensiv rubinroter Farbe mit sehr guten Nassechtheiten.

Beispiel 37

Man bedruckt eine Papierbahn nach dem Flexodruckverfahren mit einer Drucktinte, die aus 10 Teilen des gemäss Beispiel 5 erhaltenen Farbstoffpräparates, 5 Teilen Wasser, 3 Teilen eines Harnstoff-Formaldehydharzes (Uresin® B, Hoechst), 60 Teilen einer 15 %igen Polyvinylbutyralharzlösung in Aethylalkohol (Mowital® B30H-Lösung) und 22 Teilen Aethylalkohol, besteht.

Das Farbstoffpräparat wird vorverdünnt mit Wasser in das in Aethanol vorgelöste Gemisch von Harnstoff-Formaldehydharz und Polyvinylbutyrat unter guter Turbulenz eingerührt und sehr sorgfältig homogenisiert.

Es resultiert mit dieser Flexodruckfarbe auf Umdruckpapier ein reibfester Druck, der sich in einem Transferkalander bei einer Temperatur von 200 bis 210° während einer Kontaktzeit von 30 bis 35 Sekunden mit sehr hoher Farbausbeute auf ein Polyester -Gewebe oder -Gewirke übertragen lässt. Als Farbton resultiert ein intensives, stark blaustichiges Rot. Die Gebrauchsechtheiten des transferierten Dessins sind sehr gut.

Beispiele 38 - 40

400 Teile des optischen Aufhellers der Formel

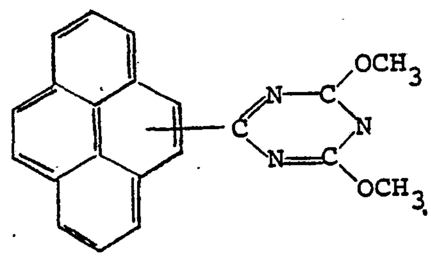

in Form des wässrigen Presskuchens werden mit 40 Teilen des nichtionogenen Polykondensationsproduktes aus Beispiel 1, 100 Teilen 1,2-Propylenglykol, 5 Teilen Formaldehyd, dem in der folgenden Tabelle genannten Aminoplast-Vorkondensat in der dort angegebenen Menge und soviel Wasser, dass die Ansatzmenge 1 000 Teilen entspricht, verrührt.

Die Ansätze werden in einer Perlmühle 7,5 Stunden gemahlen, bis die Grösse der einzelnen Aufhellerteilchen auf unter 4 µm reduziert ist, die Hauptmenge der Teilchen jedoch wesentlich kleiner als 1 µm ist. Die Feinheit der Dispersion wird dabei durch einen Filtrationstest, wie er auf Seite 13 beschrieben ist, kontrolliert. Die Filtrationszeiten liegen bei allen Versuchen unter 20 Sekunden. Nach 1 monatiger Lagerung bei einer Temperatur von 60 °C ist die Filtrierbarkeit der Suspension noch ebensogut.

| Beispiel | Teile | Aminoplast-Vorkondensat |
|---|---|---|
| 38 | 20 | 1,3-Dimethylol-4-methoxy-5,5-dimethyl-propylenharnstoff |
| 39 | 25 | Kond. prod. aus 1 Mol Harnstoff, 2,5 Mol Formaldehyd und 0,05 Mol Diäthylentriamin |
| 40 | 20 | Dimethyloldihydroxyäthylenharnstoff |

Beispiel 41

400 Teile des optischen Aufhellers der Formel

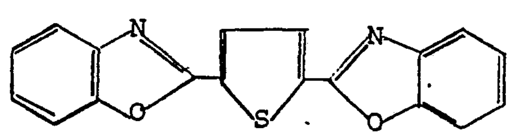

in Form des getrockneten Presskuchens werden mit 40 Teilen des nichtionogenen Polykondensationsproduktes aus Beispiel 1, 30 Teilen Dimethylolharnstoff, 100 Teilen 1,2-Propylenglykol, 5 Teilen Formaldehyd und 425 Teilen Wasser verrührt und in einer vertikalen Sandmühle mittels Ottawasand während 9 Stunden fein gemahlen, so dass der Feinheitsgrad in etwa demjenigen der Beispiele 38-40 entspricht. Eine 14 tätige Aufbewahrung bei 60 °C ergibt keine nennenswerte Veränderung der Filtrationszeit, was für eine sehr gute Suspensionsstabilität spricht. Auch bleibt die Formulierung sehr niedrigviskos wie unmittelbar nach der Mahlung.

Beispiel 42

400 Teile des optischen Aufhellers der Formel

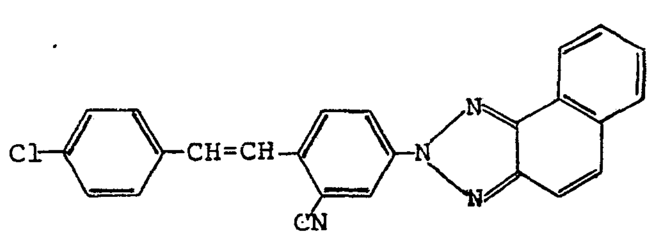

in Form von getrocknetem Presskuchen werden mit 40 Teilen des nichtionogenen Polykondensationsproduktes aus Beispiel 1, 50 Teilen einer wässrigen Lösung, enthaltend 60 % Pentamethylolmelamin-pentamethylaether, 100 Teilen Propylenglykol, 5 Teilen Formaldehyd und 405 Teilen Wasser verrührt und in gleicher Weise und während entsprechender Zeitdauer gemahlen wie im Beispiel 41. Die resultierende Suspension weist analog gute Heisslagerbeständigkeit auf wie diejenige des Aufhellers aus Beispiel 41.

Beispiel 43

385 Teile des grünen Küpenfarbstoffes der Formel

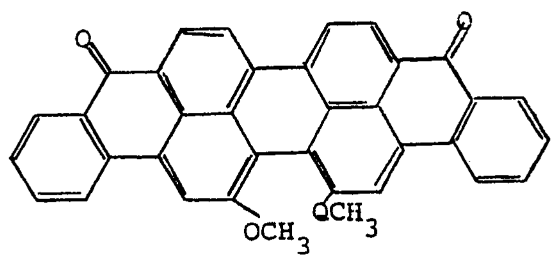

in Form eines 78 %igen salzarmen Presskuchens werden in einem Gemisch aus 30 Teilen Aminoplast-Vorkondensat, bestehend aus Dimethylolaethylenharnstoff und Methylolmelamin, 20 Teilen des nichtionogenen Polykondensationsproduktes aus Beispiel 1, 100 Teilen 1,2-Propylenglykol, 5 Teilen Formalin und 460 Teilen Wasser angerührt und nach Entlüftung mittels Glasperlen in einer Perlmühle auf eine Partikelgrösse, die im wesentlichen unter einem μm liegt, heruntergemahlen. Die resultierende einwandfreie Filtrierbarkeit und die sehr geringe Viskosität der Suspension bleiben auch nach einer Lagerung während 3 Wochen bei + 60 °C einwandfrei erhalten.

Beispiel 44

200 g des gemäss Beispiel 1 erhaltenen Farbstoffpräparates werden in 1 000 g einer Mischung, enthaltend

41 % Isopropanol,
41 % n-Propanol,
8 % Celluloseacetatpropionat und
10 % Wasser

unter Rühren eingetragen.

Man erhält eine Drucktinte, welche sich gut zum Bedrucken von Papier für den Transferdruck gemäss den in Beispiel 35 beschriebenen Bedingungen eignet.

**Ansprüche**

1. Wässrige elektrolytarme bis elektrolytfreie Farbstoffpräparate von in Wasser unlöslichen bis schwerlöslichen Farbstoffen, deren Teilchengrösse kleiner als 10 μ, insbesondere kleiner als 2 μ ist, dadurch gekennzeichnet, dass diese Präparate mindestens 10 Gew.% Wasser, 25-60 Gew.% eines feindispersen in Wasser unlöslichen bis schwerlöslichen Farbstoffes, 0,1-5 Gew.% mindestens eines wasserlöslichen Aminoplast-Vorkondensates, 0,5-5 Gew.% eines nichtionogenen Copolymerisates von Aethylenoxid mit einem weiteren Olefinoxid mit mindestens 65 Gew.% Aethylenoxidanteil und einem Molekulargewicht über 12.000 sowie gegebenenfalls weitere nicht ionogene Zusätze enthalten.

2. Farbstoffpräparate gemäss Patentanspruch 1, dadurch gekennzeichnet, dass diese 0,5 bis 3 Gew.% eines wasserlöslichen Aminoplast-Vorkondensates und 1 bis 3 Gew.% eines Copolymerisates von Aethylenoxid mit einem weiteren Olefinoxid enthalten.

3. Farbstoffpräparate gemäss Patentanspruch 1, dadurch gekennzeichnet, dass diese 35 bis 50 Gew.% Dispersionsfarbstoffe oder Küpenfarbstoffe enthalten.

4. Farbstoffpräparate gemäss Patentanspruch 1, dadurch gekennzeichnet, dass sie als wasserlösliches Aminoplast-Vorkondensat ein Kondensationsprodukt aus einem Aldehyd oder Keton mit einer Amino-, Imino oder Amidgruppen aufweisenden Verbindung enthalten.

5. Farbstoffpräparate gemäss Patentanspruch 1, dadurch gekennzeichnet, dass sie als wasserlösliches Aminoplast-Vorkondensat ein Kondensationsprodukt aus einem Aldehyd oder Keton mit einer Amino-, Imino- oder Amidgruppen aufweisenden Verbindung enthalten, in welchem die OH-Gruppen ganz oder teilweise veräthert sind, vorzugsweise durch Umsetzung mit Methanol.

6. Farbstoffpräparate gemäss Patentansprüchen 4 oder 5, dadurch gekennzeichnet, dass sie als wasserlösliches Aminoplast-Vorkondensat ein Kondensationsprodukt aus einem Aldehyd, vorzugsweise Formaldehyd, mit Harnstoff, einem Harnstoffderivat, Melamin, Benzoguanamin oder Acetoguanamin enthalten.

7. Farbstoffpräparate gemäss Patentanspruch 6, dadurch gekennzeichnet, dass sie als wasserlösliches Aminoplast-Vorkondensat ein Kondensationsprodukt aus Formaldehyd mit Harnstoff oder Melamin enthalten, wobei vorzugsweise mindestens 2 Mol Formaldehyd pro Mcl Harnstoff oder Melamin umgesetzt wurden.

8. Farbstoffpräparate gemäss Patentanspruch 1, dadurch gekennzeichnet, dass sie als nichtionogenes Copolymerisat ein solches von Aethylenoxid mit einem weiteren Olefinoxid mit einem Aethylenoxidgehalt von mindestens 80 % enthalten.

9. Farbstoffpräparate gemäss Patentanspruch 1, dadurch gekennzeichnet, dass sie als Copolymerisat von Aethylenoxid mit einem weiteren Olefinoxid ein Copolymerisat aus Aethylenoxid und Propylenoxid enthalten.

10. Farbstoffpräparate gemäss Patentanspruch 1, dadurch gekennzeichnet, dass sie ein Copolymerisat von Aethylenoxid und Propylenoxid der Formel

$$HO(CH_2-CH_2-O)_a-(\underset{\displaystyle CH_3}{\underset{|}{C}}H-CH_2-O)_b-(CH_2-CH_2-O)_c-H$$

worin die Summe von a und c eine Zahl von mindestens 150, vorzugsweise 200 und 400 und b eine Zahl zwischen 20 und 100, vorzugsweise 30 bis 80 bedeutet, enthalten oder ein solches, worin die Summe von a + c eine Zahl von 200 bis 225 und b eine Zahl von 60 bis 80 bedeutet oder ein solches, worin die Summe von a + c eine Zahl von 280 bis 320 und b eine Zahl von 50 bis 60 bedeutet, oder ein solches, worin die Summe von a + c eine Zahl von 220 bis 280 und b eine Zahl von 40 bis 55 bedeutet.

11. Farbstoffpräpartate gemäss Patentanspruch 1, dadurch gekennzeichnet, dass sie als weitere Zusätze hygroskopische Mittel, Antifrostmittel, Antimicrobica, Fungicide, Antischaummittel oder viskositätsverbessernde Mittel enthalten.

12. Farbstoffpräparate gemäss Patentanspruch 1, dadurch gekennzeichnet, dass sie mindestens 20 Gew.% Wasser, 25 bis 60 Gew.% eines Dispersionsfarbstoffes, 0,1 bis 5 Gew.% eines wasserlöslichen Aminoplast-Vorkondensates, 0,5 bis 5 Gew.% eines Copolymerisates aus Aethylenoxid und Propylenoxid mit mindestens 65 Gew.% Aethylenoxidgehalt sowie gegebenenfalls weitere nicht ionogene Zusätze enthalten.

13. Farbstoffpräparate gemäss Patentanspruch 12, dadurch gekennzeichnet, dass sie mindestens 20 Gew.% Wasser, 35-50 Gew.% eines Dispersions- oder Küpenfarbstoffes, 0,5-3 Gew.% eines wasserlöslichen Aminoplast-Vorkondensates, 1-3 Gew.% eines Copolymerisates aus Aethylenoxid und Propylenoxid mit mindestens 65 Gew.% Aethylenoxidgehalt sowie gegebenenfalls weitere nicht ionogene Zusätze enthalten.

14. Farbstoffpräparate gemäss einem der Patentansprüche 1 oder 4-11, dadurch gekennzeichnet, dass sie das wasserlösliche Aminoplast-Vorkondensat in einer Menge von 2-10, vorzugsweise 3-6 Gew.%, bezogen auf den Farbstoff, enthalten.

15. Farbstoffpräparate gemäss einem der Patentansprüche 1 oder 4-11, dadurch gekennzeichnet, dass sie das nichtionogene Copolymerisat in einer Menge von 2-10, vorzugsweise 3-6 Gew.%, bezogen auf den Farbstoff, enthalten.

16. Verfahren zur Herstellung der wässrigen Farbstoffpräparate gemäss den Patentansprüchen 1 bis 15, dadurch gekennzeichnet, dass man den definitionsgemässen Farbstoff in Wasser unter Zusatz von mindestens einem der genannten wasserlöslichen Aminoplast-Vorkondensate oder eines der angegebenen Copolymerisate vermahlt und gegebenenfalls die restlichen Komponenten vor, während oder nach dem Mahlprozess zugibt, sodass ein Präparat entsteht, dessen Teilchengrösse kleiner als 10 μ, insbesondere kleiner als 2 μ ist.

17. Verfahren gemäss Patentanspruch 16, dadurch gekennzeichnet, dass man den Farbstoff in Wasser unter Zusatz eines Copolymerisates mahlt und danach ein Aminoplast-Vorkondensat zugibt.

18. Verwendung der wässrigen Farbstoffpräparate gemäss den Patentansprüchen 1 bis 15 zur Bereitung von Druckpasten auf wässriger, organischer oder wässrig-organischer Basis oder auf Basis einer Wasser-in-Oel Emulsion.

19. Die gemäss Patentanspruch 18 erhaltenen Druckpasten.

20. Druckpasten gemäss Patentanspruch 19, dadurch gekennzeichnet, dass sie als Verdicker solche auf Polyacrylbasis oder Copolymere aus Aethylen und Maleinsäureanhydrid enthalten.

21. Druckpasten gemäss Patentanspruch 20, dadurch gekennzeichnet, dass sie als Verdicker ein Gemisch aus verzweigtem und linearem Carboxypolymethylenpolymer enthalten, wobei vorzugsweise das verzweigte Carboxypolymethylenpolymer ein Molekulargewicht von etwa 4.000.000 und das lineare ein Molekulargewicht von etwa 500.000 bis 1.000.000 aufweist.

22. Verwendung der gemäss Patentanspruch 18 erhaltenen Druckpasten zum Bedrucken von Textilmaterialien, insbesondere zum Bedrucken solcher aus Polyestermaterial im Direktdruck.

23. Verwendung der gemäss Patentanspruch 18 erhaltenen Druckpasten zum Bedrucken von Trägermaterialien, insbesondere Papier unter Anwendung von im Transferdruck geeigneten Farbstoffen.

24. Verwendung der wässrigen Farbstoffpräparate gemäss den Patentansprüchen 1 bis 15 zur Herstellung von Färbeflotten oder Druckpasten zum Färben oder Bedrucken von synthetischen Textilmaterialien.

**Claims**

1. An aqueous dyestuff preparation of a water-insoluble or sparingly water-soluble dye having a particle size of less than 10 μ and especially of less than 2 μ, said preparation having a low content of or being free of electrolytes, characterised in that it contains at least 10 % by weight of water, 25-60 % by weight of a finely dispersed water-insoluble or sparingly water-soluble dye, 0.1 to 5 % by weight of at least one water-soluble aminoplast precondensate and 0.5 to 5 % by weight of a non-ionic copolymer of ethylene oxide and a further olefin oxide, said copolymer having an ethylene oxide content of at least 65 % by weight and a molecular weight of more than 12 000 and also, if desired, further non-ionic ingredients.

2. A dyestuff preparation according to claim 1, characterised in that it contains 0.5 to 3 % by weight of a water-soluble aminoplast precondensate and 1 to 3 % by weight of a copolymer of ethylene oxide and a further olefin oxide.

3. A dyestuff preparation according to claim 1, characterised in that it contains 35 to 50 % by weight of a disperse or vat dye.

4. A dyestuff preparation according to claim 1, characterised in that the water-soluble aminoplast precondensate is a condensation product of an aldehyde or ketone with a compound containing amino, imino or amide groups.

5. A dyestuff preparation according to claim 1, characterised in that the water-soluble aminoplast precondensate is a condensation product of an aldehyde or ketone with a compound containing amino, imino or amide groups, in which the OH groups are completely or partially etherified, preferably by reaction with methanol.

6. A dyestuff preparation according to either of claims 4 or 5, characterised in that the water-soluble aminoplast precondensate is a condensation product of an aldehyde, preferably formaldehyde, with urea, a urea derivative, melamine, benzoguanamine or acetoguanamine.

7. A dyestuff preparation according to claim 6, characterised in that the water-soluble aminoplast precondensate is a condensation product of formaldehyde with urea or melamine, in the reaction of which preferably at least 2 moles of formaldehyde per mole of urea or melamine are used.

8. A dyestuff preparation according to claim 1, characterised in that the non-ionic copolymer is a copolymer of ethylene oxide and a further olefin oxide, said copolymer containing at least 80 % of ethylene oxide.

9. A dyestuff preparation according to claim 1, characterised in that the copolymer of ethylene oxide and a further olefin oxide is a copolymer of ethylene oxide and propylene oxide.

10. A dyestuff preparation according to claim 1, characterised in that it contains a copolymer of ethylene oxide and propylene oxide of the formula

$$HO(CH_2-CH_2-O)_a-(\underset{CH_3}{\underset{|}{C}}H-CH_2-O)_b-(CH_2-CH_2-O)_c-H$$

in which the sum of a and c is a number of at least 150 and preferably between 200 and 400 and b is a number between 20 and 100, preferably between 30 and 80, or one in which the sum of a + c is a number from 200 to 225 and b is a number from 60 to 80, or one in which the sum of a + c is a number from 280 to 320 and b is a number from 50 to 60, or one in which the sum of a + c is a number from 220 to 280 and b is a number from 40 to 55.

11. A dyestuff preparation according to claim 1, characterised in that the further ingredients are hygroscopic agents, antifrost agents, antimicrobial agents, fungicides, antifoams of viscosity improvers.

12. A dyestuff preparation according to claim 1, characterised in that it contains at least 20 % by weight of water, 25 to 60 % by weight of a disperse dye, 0.1 to 5 % by weight of a water-soluble aminoplast precondensate, 0.5 to 5 % by weight of a copolymer of ethylene oxide and propylene oxide, said copolymer containing at least 65 % by weight of ethylene oxide, and, if desired, further non-ionic ingredients.

13. A dyestuff preparation according to claim 12, characterised in that it contains at least 20 % by weight of water, 35 to 50 % by weight of a disperse dye or vat dye, 0.5 to 3 % by weight of a water-soluble aminoplast precondensate, 1 to 3 % by weight of a copolymer of ethylene oxide and propylene oxide, said copolymer containing at least 65 % by weight of ethylene oxide, and, if desired, further non-ionic ingredients.

14. A dyestuff preparation according to any one of claims 1 or 4 to 11, characterised in that it contains the water-soluble aminoplast precondensate in an amount of 2 to 10 % by weight, preferably to 3 to 6 % by weight, based on the amount of dye.

15. A dyestuff preparation according to any one of claims 1 or 4 to 11, characterised in that it contains the non-ionic copolymer in an amount of 2 to 10 % by weight, preferably 3 to 6 % by weight, based on the amount of dye.

16. A process for the production of an aqueous dyestuff preparation according to any one of claims 1 to 15, characterised in that the indicated dye is ground in water with the addition of at least one of the said water-soluble aminoplast precondensates or of one of the indicated copolymers and, if desired, the remaining components are added before, during of after the grinding process, to produce a preparation which has a particle size of less than 10 μ and in particular of less than 2 μ.

17. A process according to claim 16, characterised in that the dye is ground in water with the addition of a copolymer and subsequently an aminoplast precondensate is added.

18. A method of preparing printing pastes on an aqueous, organic or aqueous-organic basis or based on a water-in-oil emulsion, which comprises the use of an aqueous dye preparation according to any one of claims 1 to 15.

19. A printing paste obtained according to claim 18.

20. A printing paste according to claim 19, characterised in that the thickener is a polyacrylic thickener or a copolymer of ethylene and maleic anhydride.

21. A printing paste according to claim 20, characterised in that the thickener is a mixture of a branched and a linear carboxypolymethylene polymer, said branched carboxypolymethylene polymer preferably having a molecular weight of about 4 000 000 and said linear carboxypolymethylene polymer having a molecular weight of about 500 000 to 1 000 000.

22. A method of direct printing on textile material, especially polyester material, which comprises the use of a printing paste according to claim 18.

23. A method of printing supports, especially paper, with dyes suitable for transfer printing, which comprises the use of a printing paste obtained according to claim 18.

24. A method of producing dye liquors or printing pastes for dyeing or printing synthetic textile material, which comprises the use of an aqueous dyestuff preparation according to any one of claims 1 to 15.

**Revendications**

1. Préparations tinctoriales aqueuses pauvres en électrolyte à exemptes d'électrolyte de colorants insolubles à difficilement solubles dans l'eau, dont la grosseur des particules est inférieure à 10 μ, en particulier inférieure à 2 μ, caractérisées par le fait que ces préparations contiennent au moins 10 % en poids d'eau, 25 à 60 % en poids d'un colorant finement dispersé insoluble à difficilement soluble dans l'eau, 0,1 à 5 % en poids d'au moins un précondensat d'aminoplaste soluble dans l'eau, 0,5 à 5 % en poids d'un copolymère non-ionogène d'oxyde d'éthylène avec un autre oxyde d'oléfine, comportant au moins 65 % en poids de fraction oxyde d'éthylène et ayant un poids moléculaire supérieur à 12 000, ainsi qu'éventuellement d'autres additifs non-ionogènes.

2. Préparations tinctoriales selon la revendication 1, caractérisées par le fait que celles-ci contiennent 0,5 à 3 % en poids d'un précondensat d'aminoplaste soluble dans l'eau et 1 à 3 % en poids d'un copolymère d'oxyde d'éthylène avec un autre oxyde d'oléfine.

3. Préparations tinctoriales selon la revendication 1, caractérisées par le fait que celles-ci contiennent 35 à 50 % en poids de colorants dispersés ou de colorants pour cuve.

4. Préparations tinctoriales selon la revendication 1, caractérisées par le fait qu'elles contiennent comme précondensat d'aminoplaste soluble dans l'eau, un produit de condensation d'un aldéhyde ou d'une cétone avec un composé présentant des groupes amino, imino ou amide.

5. Préparations tinctoriales selon la revendication 1, caractérisées par le fait qu'elles contiennent comme précondensat d'aminoplaste soluble dans l'eau, un produit de condensation d'un aldéhyde ou d'une cétone avec un composé présentant des groupes amino, imino, ou amide, produit de condensation dans lequel les groupes OH sont totalement ou partiellement éthérifiés, de préférence par réaction avec du méthanol.

6. Préparations tinctoriales selon les revendications 4 ou 5, caractérisées par le fait qu'elles contiennent comme précondensat d'aminoplaste soluble dans l'eau un produit de condensation d'un aldéhyde, de préférence du formaldéhyde, avec l'urée, un dérivé de l'urée, la mélamine, la benzoguanamine, ou avec la cétoguanamine.

7. Préparations tinctoriales selon la revendication 6, caractérisées par le fait qu'elles contiennent comme précondensat d'aminoplaste soluble dans l'eau, un produit de condensation du formaldéhyde avec l'urée ou la mélamine, étant donné que de préférence, on a fait réagir au moins deux moles de formaldéhyde par mole d'urée ou de mélamine.

8. Préparations tinctoriales selon la revendication 1, caractérisées par le fait qu'elles contiennent comme copolymère non-ionogène un copolymère d'oxyde d'éthylène avec un autre oxyde d'oléfine ayant une teneur en oxyde d'éthylène d'au moins 80 %.

9. Préparations tinctoriales selon la revendication 1, caractérisée par le fait qu'elles contiennent comme copolymère d'oxyde d'éthylène avec un autre oxyde d'oléfine un copolymère d'oxyde d'éthylène

et d'oxyde de propylène.

10. Préparations tinctoriales selon la revendication 1, caractérisée par le fait qu'elles contiennent un copolymère d'oxyde d'éthylène et d'oxyde de propylène avant la formule :

$$HO(CH_2-CH_2-O)_a-(\underset{\displaystyle CH_3}{\underset{|}{C}}H-CH_2-O)_b-(CH_2-CH_2-O)_c-H$$

dans laquelle la somme de a et c est un nombre valant au moins 150, de préférence compris entre 200 et 400, et b est un nombre compris entre 20 et 100, de préférence entre 30 et 80, ou bien un copolymère de ce genre dans lequel la somme de a + c est un nombre allant de 200 à 225, et b est un nombre allant de 60 à 80, ou bien un copolymère de ce genre dans lequel la somme de a + c est un nombre allant de 280 à 320, et b est un nombre allant de 50 à 60, ou bien un copolymère de ce genre dans lequel la somme de a + c est un nombre allant de 220 à 280, et b est un nombre allant de 40 à 55.

11. Préparations tinctoriales selon la revendication 1, caractérisées par le fait qu'elles contiennent comme autres additifs des agents hygroscopiques, des antigels, des agents microbicides, des fongicides, des agents antimousse ou des agents améliorant la viscosité.

12. Préparations tinctoriales selon la revendication 1, caractérisées par le fait qu'elles contiennent au moins 20 % en poids d'eau, 25 à 60 % en poids d'un colorant dispersé, 0,1 à 5 % en poids d'un précondensat d'aminoplaste soluble dans l'eau, 0,5 à 5 % en poids d'un copolymère d'oxyde d'éthylène et d'oxyde de propylène ayant une teneur en oxyde d'éthylène de 65 % en poids, ainsi qu'éventuellement d'autres additifs non-ionogènes.

13. Préparations tinctoriales selon la revendication 12, caractérisées par le fait qu'elles contiennent au moins 20 % en poids d'eau, 35 à 50 % en poids d'un colorant dispersé ou d'un colorant pour cuve, 0,5 à 3 % en poids d'un précondensat d'aminoplaste soluble dans l'eau, 1 à 3 % en poids d'un copolymère d'oxyde d'éthylène et d'oxyde de propylène ayant une teneur en oxyde d'éthylène d'au moins 65 % en poids, ainsi qu'éventuellement d'autres additifs non-ionogènes.

14. Préparations tinctoriales selon l'une quelconque des revendications 1 ou 4 à 11, caractérisées par le fait qu'elles contiennent le précondensat d'aminoplaste soluble dans l'eau en une quantité de 2 à 10 %, de préférence de 3 à 6 % en poids, rapportée au colorant.

15. Préparations tinctoriales selon l'une quelconque des revendications 1 ou 4 à 11, caractérisées par le fait qu'elles contiennent le copolymère non-ionogène en une quantité de 2 à 10 %, de préférence de 3 à 6 % en poids, rapportée au colorant.

16. Procédé pour la fabrication de préparations tinctoriales aqueuses selon l'une quelconque des revendications 1 à 15, caractérisé par le fait qu'on broie le colorant conforme à la définition dans l'eau en ajoutant au moins un des précondensats d'aminoplastes solubles dans l'eau mentionné ou un des copolymères indiqués et qu'on ajoute éventuellement le reste des composants avant, pendant ou après le processus de broyage, de sorte qu'il se forme une préparation dont la grosseur des particules est inférieure à 10 μ, en particulier inférieure à 2 μ.

17. Procédé selon la revendication 16, caractérisé par le fait qu'on broie le colorant dans l'eau en ajoutant un copolymère puis qu'on ajoute un précondensat d'aminoplaste.

18. Utilisation des préparations tinctoriales aqueuses selon l'une quelconque des revendications 1 à 15 pour la fabrication de pâtes d'impression à base aqueuse, organique ou hydro-organique ou bien à base d'une émulsion « eau dans huile ».

19. Les pâtes d'impression obtenues selon la revendication 18.

20. Pâtes d'impression selon la revendication 19, caractérisées par le fait qu'elles contiennent comme épaississants ceux à base polyacrylique ou des copolymères d'éthylène et d'anhydride maléïque.

21. Pâtes d'impression selon la revendication 20, caractérisées par le fait qu'elles contiennent comme épaississants un mélange de polymères carboxypolyméthylène ramifié et linéaire, le carboxypolyméthylène polymère ramifié, présentant de préférence un poids moléculaire d'environ 4 000 000 et le polymère carboxypolyméthylène linéaire présentant un poids moléculaire d'environ 500 000 à 1 000 000.

22. Utilisation des pâtes d'impression, obtenues selon la revendication 18, pour imprimer des matières textiles, en particulier pour imprimer celles en matière polyester dans l'impression directe.

23. Utilisation des pâtes d'impression, obtenues selon la revendication 18, pour imprimer des matières-supports, en particulier du papier, en utilisant des colorants appropriés à l'impression par transfert.

24. Utilisation des préparations tinctoriales aqueuses selon l'une quelconque des revendications 1 à 15, pour la fabrication de bains de teinture ou de pâtes d'impression pour teindre ou imprimer des matières textiles synthétiques.